# EUROPEAN PATENT SPECIFICATION

(11) **EP 1 352 821 B1**
(45) Date of publication and mention of the grant of the patent: **09.03.2005**
(21) Application number: 03001347.8
(22) Date of filing: 23.01.2003
(51) Int. Cl.: B62K 15/00

(54) **Stretchable bicycle**
Verlängerbares Fahrrad
Bicyclette à longueur variable

(30) Priority: 09.04.2002 CN 02116476
(43) Date of publication of application: 15.10.2003
(73) Proprietor: Chao, Hung-Chang, Taipei (TW)
(72) Inventor: Chao, Hung-Chang, Taipei (TW)
(74) Representative: Hellmich, Wolfgang, Dr.-Ing.

(56) References cited:
- DE-A- 2 106 584
- DE-A- 3 720 112
- DE-A- 3 724 426
- DE-A- 19 507 921
- DE-U- 6 803 090
- US-A- 3 807 762

## Description

The present invention relates to a bicycles and more particularly to a stretchable bicycle with improved characteristics.

Bicycle as a transportation means is well known. Recently, bicycle is also used as a recreation means. Hence, the structure of bicycle has become more complex. Further, a variety of bicycle types are available in which a more popular one of them is a type of foldable bicycle. Furthermore, a latest type improved from the foldable bicycle is the stretchable bicycle one. Stretchable bicycle as defined herein means a rider can adjust a length of the bicycle (i.e., distance between two wheels) by operating a stretch mechanism of the bicycle so as to fit different individuals with various heights. As a result, any rider can enjoy a degree of comfort while riding the stretchable bicycle.

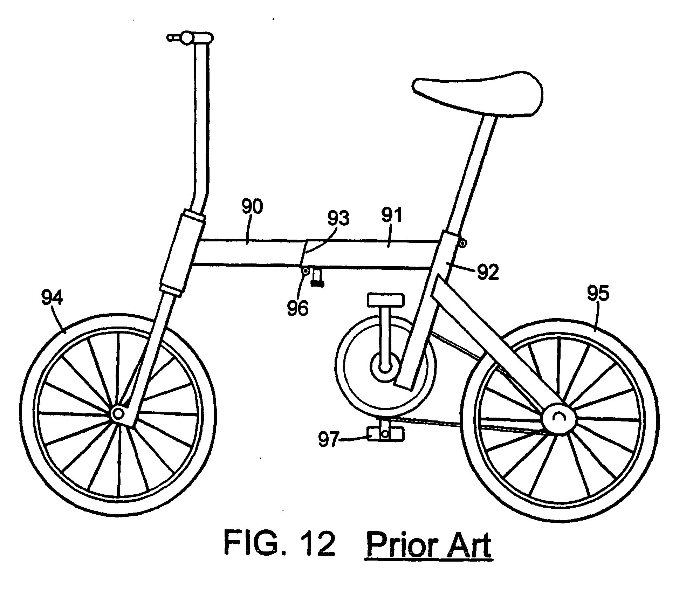

A conventional stretchable bicycle is illustrated in FIG. 12 in which a crossbar of a typical bicycle having a fixed length is divided into two parts each being separately manufactured but connectable as detailed later. As shown, a front crossbar 90 can be telescopically received in a rear crossbar 91 for adjusting a length of the bicycle. A rear end of the rear crossbar 91 is fixed to a seat tube 92 by welding and a front end 93 thereof is open for permitting a portion of the front crossbar 90 to receive in the rear crossbar 91. However, the front crossbar 90 cannot project from the rear end of the rear crossbar 91 since as stated above, the rear end of the rear crossbar 91 is closed at the seat tube 92. Thus, a shortening of a length of the front crossbar 90 (i.e., the crossbar's length) is limited. In other words, a shortening of distance between two wheels 94 and 95 is still limited. This has the drawbacks of adversely affecting storage and transportation due to large occupied space. Moreover, a fastening of the front and rear crossbars 90, 91 is effected by a single clamp device 96 therebetween. Hence, a reliable fastening of the crossbar is not possible. It is understood that a significant force is concentrated on the clamp device 96 when a rider rotates pedals 97 as the distance between the wheels 94 and 95 has been adjusted to a maximum. Hence, the front and rear crossbars 90, 91 as well as the bicycle itself are subjected to an abnormal vibration. To the worse, the bicycle may be broken into two parts if the clamp device 96 is collapsed. This is very dangerous.

The patent document US-A-3 807 762 (cf. fig 2 and 3) discloses a further stretchable bike comprising a front frame comprising a head tube (2) , a sliding bar (1) extended rearward from the head tube (2), a stem (32) extended downward from a handlebar (31a, 31b) to couple to the top of the head tube (2), a front fork extended downward from the stem (32) and a front wheel rotatably supported at bottom ends of the front fork. Said stretchable bike is further comprising a rear frame comprising a chain stay (4), a seat stay (5), a rear wheel, a bottom bracket with a pair of pedals and a drive mechanism coupled thereto, an outer seat tube (52) extended upward from the bottom bracket and a sliding inner seat tube (51) extended from and slidably received in the outer seat tube and a saddle (57) on a top of said sliding inner seat tube (51).

Thus, it is desirable to provide an improved stretchable bicycle in order to overcome the above drawbacks of the prior art.

It is an object of the present invention to provide a stretchable bicycle which comprises a separate but connectable crossbar consisting of a sliding bar extended rearward from a front frame and a cross tube fixed to a rear frame, the cross tube being adapted to telescopically receives and permits the sliding bar to project from its rear end. A distance between two wheels, being maximum, minimum, or any length between the maximum and the minimum, can be adjusted by sliding a portion of the sliding bar inside the cross tube so as to fit different individuals with various heights.

It is also an object of the present invention to provide a stretchable bicycle that can be moved easily and is suited to transport and store in, for example, trunk of an automobile after shortening to a minimum length.

It is another object of the present invention to provide a stretchable bicycle which comprises two quick-releases and an anti-twist mechanism for fastening the sliding bar at both ends of the cross tube respectively for maintaining the structural strength of the bicycle.

It is still another object of the present invention to provide a stretchable bicycle wherein for further reducing a storage or parking space, a rider can clockwise turn the bicycle 90 degrees to stand on a supporting surface so as to form a triangle by two bent portions of a kickstand and the rear end of the sliding bar.

It is a further object of the present invention to provide a stretchable bicycle wherein the sliding bar comprises a through channel for receiving umbrella, air pump, or miscellaneous items.

To achieve the above and other objects, the present invention provides a stretchable bicycle which comprises a separate but connectable crossbar consisting of a sliding bar extended rearward from a head tube of front frame and a cross tube fixed to a support tube of rear frame, the cross tube being adapted to telescopically receive and permit the sliding bar to project from its rear end. Also, two quick-releases and an anti-twist mechanism are provided for fastening the sliding bar at both ends of the cross tube respectively. Hence, a distance between two wheels, being maximum, minimum, or any length between the maximum and the minimum, can be adjusted by sliding a desired portion of the sliding bar inside the cross tube.

The drawings disclose two illustrative embodiments of the present invention which serves to exemplify the various advantages and objects hereof, and are as follow:
FIG. 1 is a perspective view of a first preferred embodiment of a stretchable bicycle according to the invention;
FIG. 2 is an exploded perspective view of FIG. 1;
FIG. 3 is a side view of FIG. 1;
FIG. 4 is similar to FIG. 3 with the bicycle extended to its maximum length;
FIG. 5 is a cross-sectional view taken along line 5-5 of FIG. 3;
FIG. 6 is a cross-sectional view taken along line 6-6 of FIG. 3;
FIG. 7 is a perspective view of the bicycle shortened to its minimum length;
FIG. 8 is another perspective view of the bicycle shown in FIG. 7 wherein the bicycle is clockwise turned 90 degrees to stand on a supporting surface;
FIG. 9 is a perspective view of a second preferred embodiment of stretchable bicycle according to the invention with the sliding seat tube and the saddle separated from the bicycle;
FIG. 10 is a perspective view of the bicycle of FIG. 9 shortened to its minimum length;
FIG. 11 is a view similar to FIG. 10 where the fully shortened bicycle is stored in a large bag; and
FIG. 12 is a side view of a conventional stretchable bicycle.

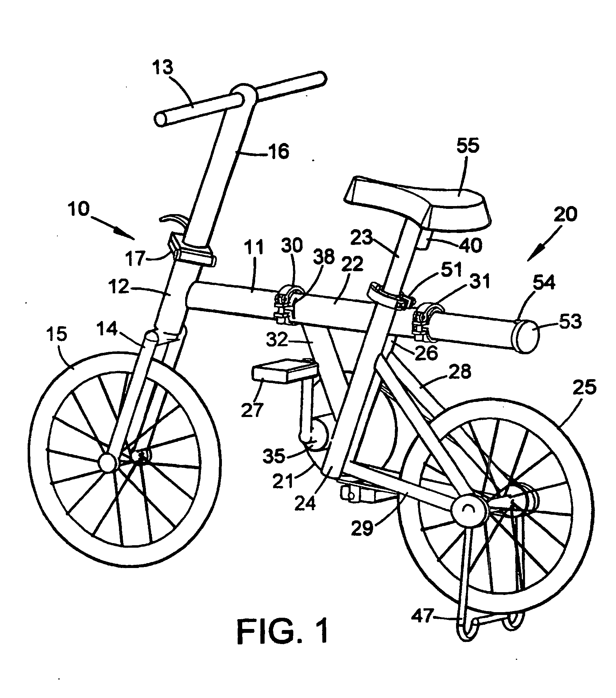

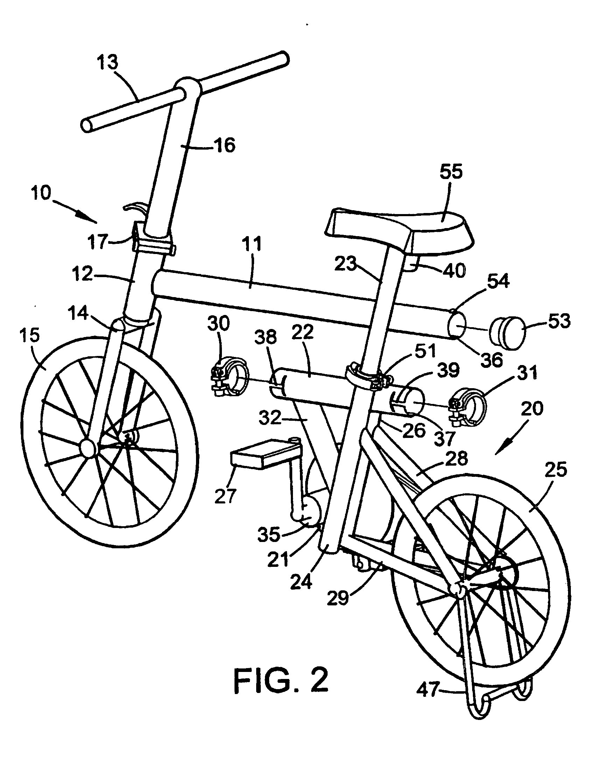

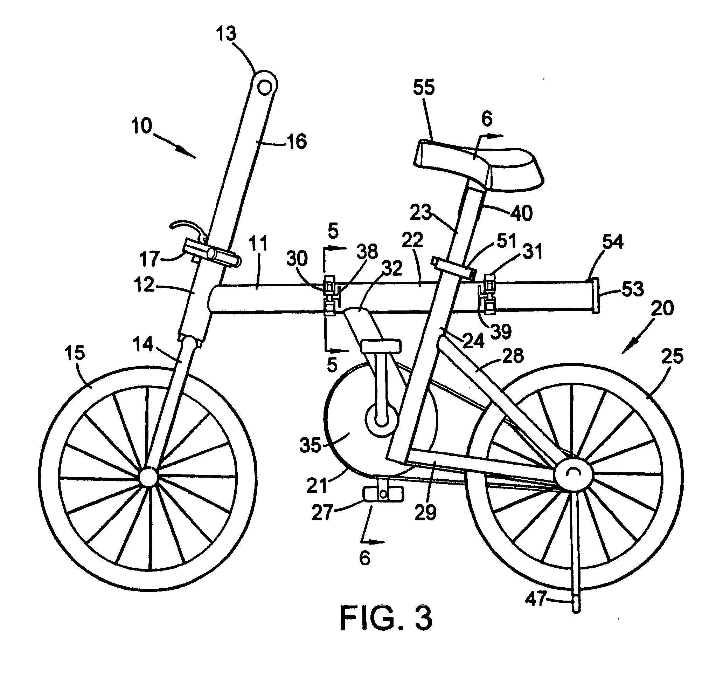

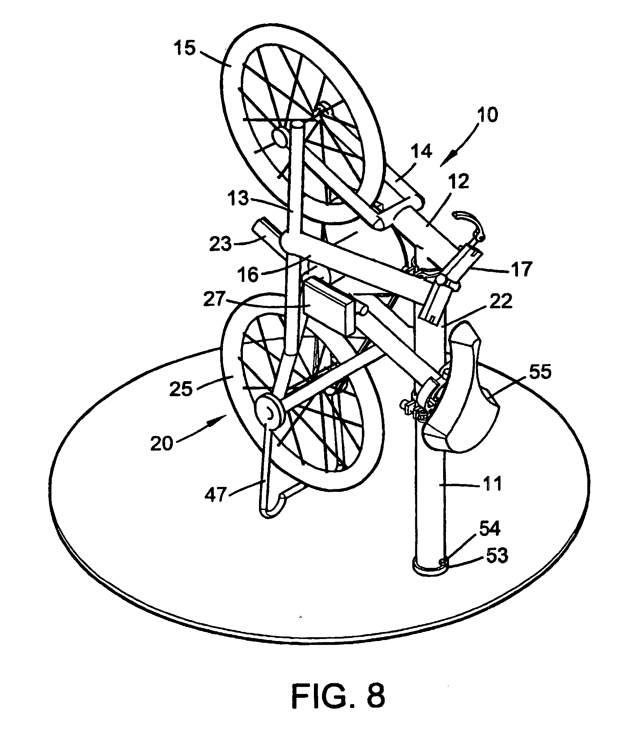

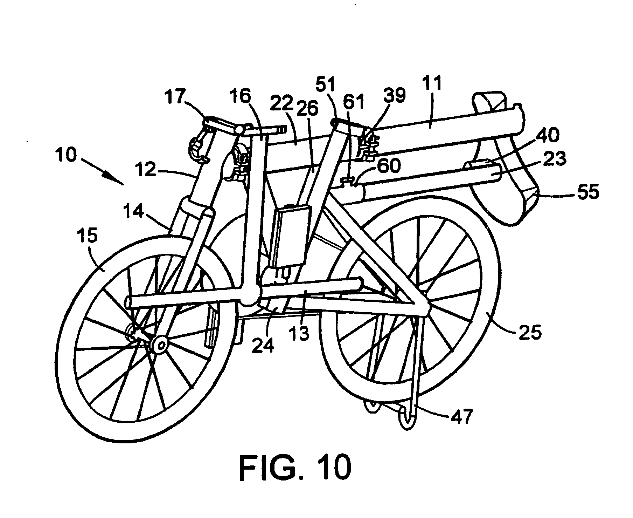

Referring to FIGS. 1 to 4, there is shown a stretchable bicycle constructed in accordance with a first preferred embodiment of the invention. The bicycle consists of a front frame 10 and a rear frame 20. The front frame 10 comprises a head tube 12, a front fork 14 extended downward from the head tube 12, a top of the head tube 12 is coupled to a bottom of a stem 16, a handlebar 13 having its center coupled to a top of the stem 16, a front wheel 15 rotatably supported at bottom ends of the front fork 14 by a bolt and nut combination, and a bearing (not shown) rotatably interconnected the front fork 14 and the head tube 12 so that a rider can manipulate the handlebar 13 to pivot in a predetermined angle about a rear section of the bicycle. The front frame 10 further comprises a hinge17 at the stem 16 near the head tube 12. The hinge 17 can be unfastened to allow the stem 16 to bend in a position shown in FIG. 8, FIG. 10. The front frame 10 further comprises a sliding bar 11 extended rearward from the head tube 12. The sliding bar 11 has a cross-section of circle in the embodiment, while it is appreciated by those skilled in the art that the sliding bar 11 may have a cross-section other than circle without departing from the scope and spirit of the invention.

The rear frame 20 comprises a bottom bracket 35 with a pair of cranks, a pair of pedals 27 and a drive mechanism 21 coupled thereto, a chain stay 29 welded at and extended rearward from the bottom bracket 35, a support tube 26 and an offset seat tube 24 parallel with the support tube 26 both welded at and extended upward from the bottom bracket 35 for forming a seat tube assembly (not numbered), a seat stay 28 welded at and extended rearward from the seat tube assembly, the seat stay 28 and the chain stay 29 having their rear ends coupled to a hub of a rear wheel 25, a drive chain (not numbered) of the drive mechanism 21 connected to the hub of the rear wheel 25 so that the bicycle can be propelled forward as the rider rotates the cranks and pedals 27, the cross tube 22 having open ends welded at the top of the support tube 26, the cross tube 22 being at the same plane as the front and rear wheels 15, 25, the cross tube 22 being adapted to telescopically receive the sliding bar 11 and permit the sliding bar 11 to project from its rear end, and a down tube 32 having both ends welded at the cross tube 22 and the support tube 26 so as to form a triangle among them. Also, the chain stay 29, the seat stay 28, and the seat tube assembly form a triangle. Hence, the structural strength of the bicycle can be enhanced.

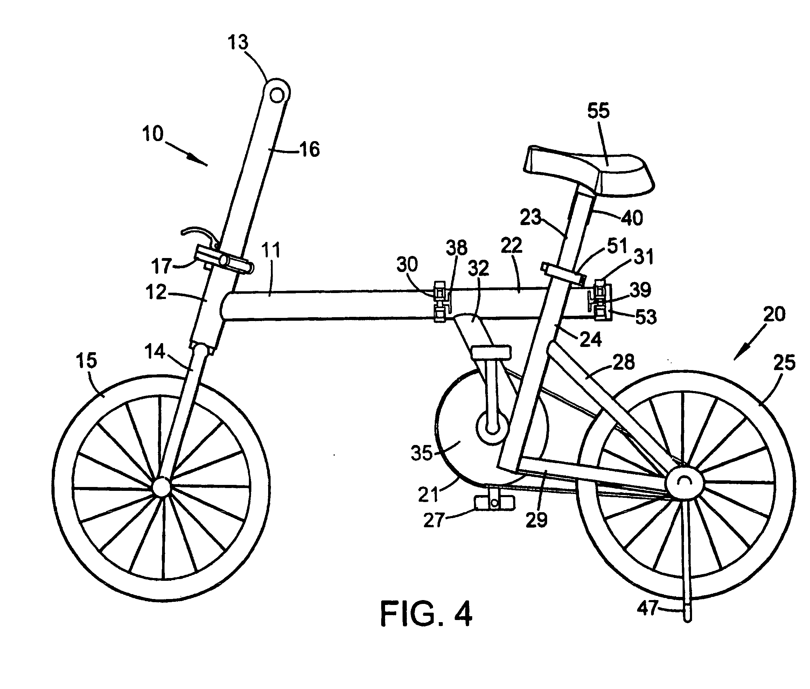

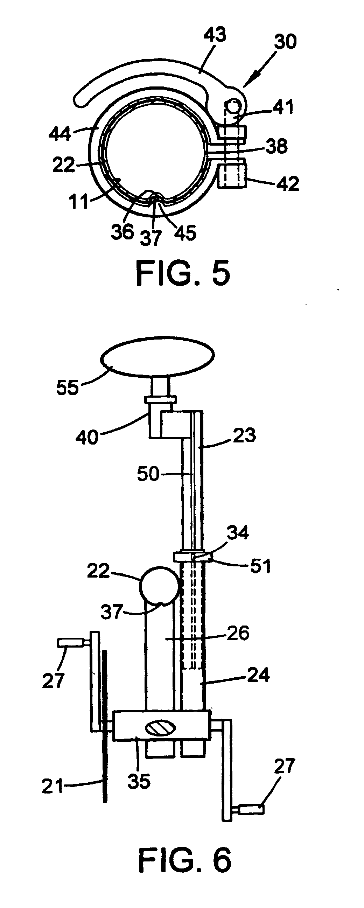

As shown in FIG. 5 in conjunction with FIGS. 1 to 4, the bicycle further comprises means for preventing the twist between the front frame 10 and the rear frame 20. This is made possible by creating a lengthwise groove 36 which is formed at an outer surface of the sliding bar 11 and a lengthwise ridge 37 which is formed at an inner surface of the cross tube 22. Hence, a tight fastening of the sliding bar 11 in the cross tube 22 is achieved as the groove 36 and the ridge 37 are closely engaged. Further, two T-shaped slots 38, 39 are formed at both ends of the cross tube 22 respectively for providing a flexibility of contraction thereat as the sliding bar 11 is fastened in the cross tube 22. At this time, the rider can select a desired length of the bicycle (i.e., distance between the wheels 15 and 25) by sliding the sliding bar 11 inside the cross tube 22. Next, two quick-releases 30, 31 are used to fasten the sliding bar 11 and the cross tube 22 at the T-shaped slots 38, 39 respectively wherein the vertical section of each T-shaped slot is contracted to cause the cross tube 22 to tightly cling onto the sliding bar 11. As shown in FIG. 4, the bicycle has been extended to its maximum length wherein the rear ends of the sliding bar 11 and the cross tube 22 are aligned and the distance between the wheels 15 and 25 is a maximum. Such configuration is appropriate for an adult or taller person. The quick-releases 30, 31 are commercially available ones such as C-shaped clips. A typical quick-release comprises a bolt 41, a nut 42, a level 43 pivotally disposed at one end of the bolt 41, and a C-shaped ring 44 put on the cross tube 22. The rider can pivot the level 43 to cause its cam surface to exert a force on the ring 44 to cling the ring 44 onto the cross tube 22. To the contrary, a quick reverse operation can unfasten the quick-releases 30 and 31 and the cross tube 22. Further, a projection 45 is formed on the ring 44 for being adapted to the ridge 37.

As shown in FIG 6, the offset seat tube 24 is laterally adjacent to the cross tube 22 and is adapted to receive an adjustable portion of the sliding seat tube 23. As such, not only the sliding bar 11 can go into the cross tube 22, which has an opening at both the front and rear ends, without being blocked by the offset seat tube 24 and the support tube 26 but also the adjustable length created by the cross tube 22 and the sliding bar 11 is extended. To align the center of gravity of the bicycle with the wheels 15 and 25 while riding, the saddle 55 is disposed at one side of the sliding seat tube 23 and a seat post 40 welded at a member laterally extended from the top of the sliding seat tube 23. Also, the seat post 40 and the saddle 55 is located right above the cross tube 22.

A third quick-release 51 is used to fasten the sliding seat tube 23 and the offset seat tube 24 when a portion of the sliding seat tube 23 is slid inside the offset seat tube 24. This mechanism for fastening the sliding seat tube 23 and the offset seat tube 24 is similar to the one used for fastening the sliding bar 11 and the cross tube 22. In this fastening mechanism a lengthwise trough 50 is formed at an outer surface of the sliding seat tube 23, a protuberance 34 is formed at an inner surface of the offset seat tube 24, the protuberance 34 being tightly engaged with the trough 50. Once adjusted, the third quick-release 51 at the top of the offset seat tube 24 can be used to fasten the sliding seat tube 23 and the offset seat tube 24. In view of the above, after adjusting the length and height of the bicycle, components of the bicycle are secured by the two fastening mechanisms. Hence, a structural strength is still maintained without worrying about collapsing at the joint of the front and the rear frames 10, 20.

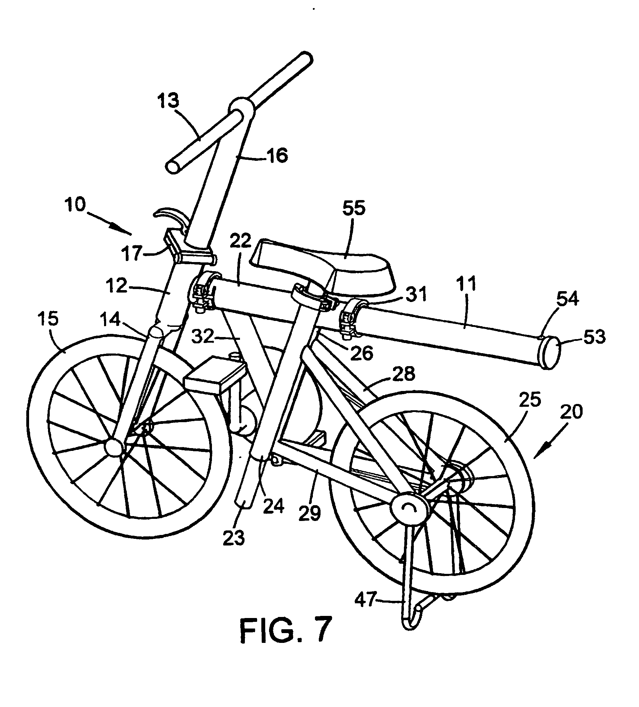

As shown in FIGS. 7 and 8, for storage or parking, it is possible of projecting the sliding bar 11 from the rear end of the cross tube 22 to a maximum i.e., the distance between the wheels 15 and 25 is shortened to a minimum. A typical U-shaped kickstand 47 is attached to the rear wheel 25. For holding the stationary bicycle upright, the rider can kick the kickstand 47 to pivot about the rear wheel 25 to a vertical position. Alternatively, for further reducing a storage or parking space the rider can clockwise turn the bicycle 90 degrees to stand on a supporting surface wherein a triangle is formed by two bent portions of the kickstand 47 and the rear end of the sliding bar 11.

Referring to FIGS. 1 to 3 again, the sliding bar 11 may be formed as a tube for receiving umbrella, air pump, or miscellaneous items. Further, a cap 53 is formed at the rear end of the sliding bar 11 for preventing the received article(s) from being dropped out of the sliding bar 11. Moreover, a battery compartment containing one or more rechargeable cells may be formed in the sliding bar 11 when the bicycle is designed as an electric bicycle.

A stop 54 is formed at the rear end of the sliding bar 11. The stop 54 can prevent the rear end of the sliding bar 11 from further sliding inside the cross tube 22 or even disengaging from the cross tube 22 when the maximum length of the rider has been reached because the rear end of the cross tube 22 is stopped by the stop 54.

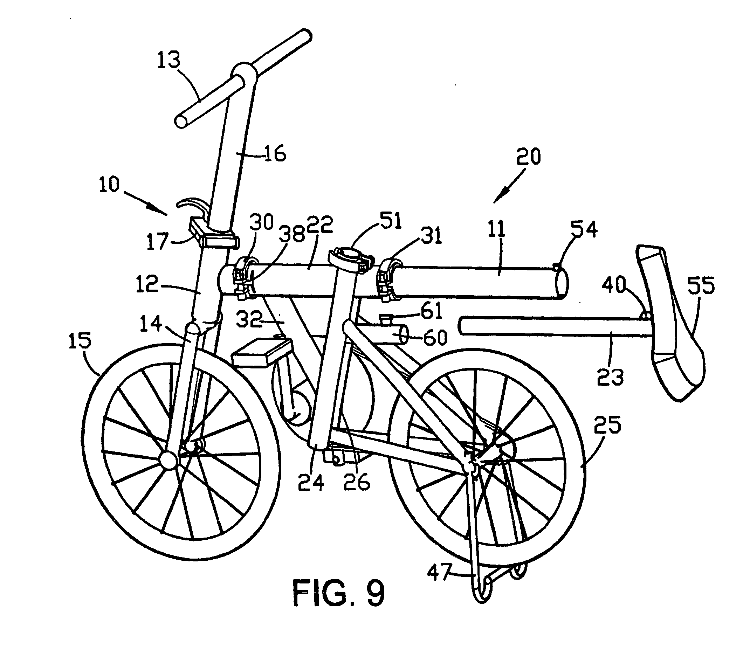

Referring to FIGS. 9 and 10, there is shown a second preferred embodiment of stretchable bicycle according to the invention. The differences between the first and the second preferred embodiments, i.e., the characteristics of the second preferred embodiment are detailed below. A saddle containing tube 60 is formed below the cross tube 22 and is welded between the offset seat tube 24 and the support tube 26. The rider can remove the sliding seat tube 23 prior to inserting into the saddle containing tube 60 for reducing a storage space. Moreover, the rider can fold down the stem 16 by unfastening the hinge17. Also, the rider can slide the sliding bar 11 into the cross tube 22 and project from the rear end of the cross tube 22 to obtain the minimum distance between the wheels 15 and 25. This is shown in FIG. 10. A bolt 61 is formed on the saddle containing tube 60. The bolt 61 can be driven to fasten the sliding seat tube 23 inside the saddle containing tube 60. In addition, the triangular saddle 55 can cause no interference with the sliding bar 11 at the position shown in FIG. 10.

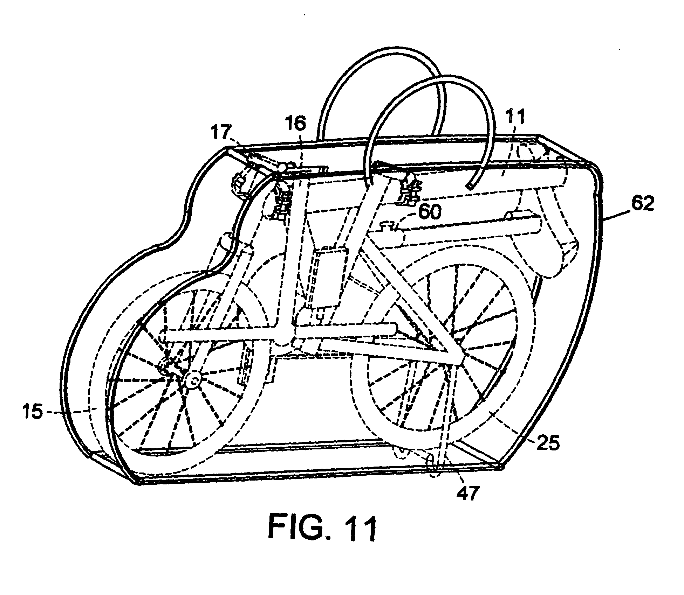

Referring to FIG. 11, the folded and shorten bicycle is stored in a bag 62 prior to transportation by lifting handles of the bag 62.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. A stretchable bicycle comprising:
a front frame (10) comprising a head tube (12), a sliding bar (11) extended rearward from the head tube, a stem (16) extended downward from a handlebar to couple to the top of the head tube (12), a front fork (14) extended downward from the stem (16), and a front wheel (15) rotatably supported at bottom ends of the front fork; and
a rear frame (20) comprising a chain stay (29), a seat stay (28), a rear wheel (25), a bottom bracket (35) with a pair of pedals (27) and a drive mechanism (21) coupled thereto, a support tube (26) and an offset seat tube (24) parallel with the support tube both extended upward from the bottom bracket (35), a cross tube (22), having openings at both of its front and rear ends, being formed at a top of the support tube (26), and being adapted to telescopically receive the sliding bar (11) of the front frame (10), a sliding seat tube (23) extended from and slidably received in the offset seat tube (24) which is laterally adjacent to the cross tube (22), a saddle (55) on a top of the sliding seat tube (23), a seat post (40) formed at a lateral extension from the top of the sliding seat tube (23) for supporting the saddle (55) right above the cross tube (22), and two quick-releases (30,31) for fastening the sliding bar (11) at both ends of the cross tube (22) respectively.

2. The stretchable bicycle of claim 1, further comprising means for preventing the twist between the front frame (10) and the rear frame (20).

3. The stretchable bicycle of claim 2, wherein said means for preventing comprises a lengthwise groove (36) formed at an outer surface of the sliding bar (11) and a lengthwise ridge (37) formed at an inner surface of the cross tube (22) so that the sliding bar (11) can be tightly fasten in the cross tube (22) as the groove (36) and the ridge (37) are tightly engaged.

4. The stretchable bicycle of claim 1, further comprising two T-shaped slots (38,39) formed at both ends of the cross tube (22) respectively for providing a flexibility of contraction thereat as the sliding bar (11) is fastened in the cross tube.

5. The stretchable bicycle of claim 1, further comprising a third quick-release (51) for fastening the sliding seat tube (23) and the offset seat tube (24) when a selected portion of the sliding seat tube (23) is slid inside the offset seat tube (24), a lengthwise trough (50) formed at an outer surface of the sliding seat tube (23), and a protuberance (34) formed at an inner surface of the offset seat tube (24), the protuberance (34) being closely engaged with the lengthwise trough (50).

6. The stretchable bicycle of claim 1, further comprising a channel formed within and along the sliding bar (11) served a receiving space and a cap (53) formed at the rear end of the sliding bar (11) for closing the rear end of the sliding bar (11).

7. The stretchable bicycle of claim 1, further comprising a U-shaped kickstand (47) attached to the rear wheel (25) wherein the bicycle is operative to clockwise turn about 90 degrees to stand on a supporting surface so as to form a triangle by two bent portions of the kickstand (47) and the rear end of the sliding bar (11).

8. The stretchable bicycle of claim 1, further comprising a stop (54) formed at the rear end of the sliding bar (11) for preventing the rear end of the sliding bar from sliding inside the cross tube or disengaging from the cross tube (22) when the rear ends of the sliding bar and the cross tube (22) tare aligned.

9. The stretchable bicycle of claim 1, further comprising a saddle containing tube (60) formed below the cross tube (22) and between the offset seat tube (24) and the support tube (26) for receiving the removed sliding seat tube (23).

## Patentansprüche

1. Verlängerbares Fahrrad mit
einem Vorderrahmen (10), der einen Gabelschaft (12), eine gleitende Stange (11), die rückwärtig aus dem Gabelschaft (12) herausragt, einen Lenkervorbau (16), der nach unten aus einem Lenker (13) herausragt, wobei er mit der Spitze des Gabelschaftes (12) verbunden ist, eine Vordergabel (14), die nach unten aus dem Lenkervorbau (16) herausragt und ein Vorderrad (15), das drehbar am unteren Ende der Vordergabel (14) gelagert wird, enthält und
einem Hinterrahmen (20) mit einer Kettenstrebe (29), einer Sitzstrebe (28), einem Hinterrad (25), einem Tretlager (35) mit einem Paar Pedalen (27) und einem damit verbundenem Antrieb (21), einem Stützrohr (26) und einem versetzt angebrachtem Sitzrohr (24) parallel zum Stützrohr, wobei beide nach oben aus dem Tretlager (35) herausragen, einem Kreuzrohr (22), das vorne und hinten Öffnungen aufweist, das am obersten Ende des Sitzrohres (26) befestigt ist und so angepasst ist, dass es die gleitende Stange (11) des Vorderrahmens (10) teleskopartig aufnimmt, einem Schiebesitzrohr (23), das aus dem Sitzrohr (24) herausragt und verschiebbar im Sitzrohr aufgenommen ist, das seitlich am Kreuzrohr (22) anliegt, einem Sattel (55) am obersten Ende des schiebbaren Sitzrohres (23), einem Sitzpfosten (40), der sich an einer seitlichen Erweiterung der Spitze des schiebbaren Sitzrohres (23) befindet, um den Sattel (55) genau über dem Kreuzrohr (22) zu lagern und zwei Schnellkupplungen (30, 31), um die gleitende Stange (11) jeweils an beiden Enden des Kreuzrohres (22) zu befestigen.

2. Verlängerbares Fahrrad gemäß Anspruch 1, ferner mit Mitteln zum Vermeiden einer Verdrehung zwischen dem Vorderrahmen (10) und dem Hinterrahmen (20) vermeiden.

3. Verlängerbares Fahrrad gemäß Anspruch 2, wobei die Mittel zum Vermeiden aus einer Längsnut (36) , die sich außen an der gleitenden Stange (11) befindet und einer Längserhöhung (37), die sich innerhalb des Kreuzrohres (22) befindet bestehen, so dass die gleitende Stange (11) sicher im Kreuzrohr (22) befestigt werden kann, weil die Längsnut (36) und die Längsfurche (37) fest ineinander eingreifen.

4. Verlängerbares Fahrrad gemäß Anspruch 1, ferner mit zwei T-förmigen Führungsnuten (38, 39), die sich jeweils an beiden Enden des Kreuzrohres (22) befinden, um eine Nachgiebigkeit zur Kontraktion zu ermöglichen, wenn die gleitende Stange (11) im Kreuzrohr befestigt wird.

5. Verlängerbares Fahrrad gemäß Anspruch 1, ferner mit einer dritten Schnellkupplung (51), um das schiebbare Sitzrohr (23) und das versetzt angebrachte Sitzrohr (24) zu befestigen, wenn ein ausgewählter Teil des schiebbaren Sitzrohres (23) in das versetzt angebrachte Sitzrohr (24) geschoben wird, mit einer länglichen Mulde (50) außen am schiebbaren Sitzrohr (23) und einem Höcker (34), der sich innerhalb des versetzt angebrachten Sitzrohres (24) befindet, wobei der Höcker (34) exakt in die längliche Mulde eingreift.

6. Verlängerbares Fahrrad gemäß Anspruch 1, ferner mit einem Tunnel, der innerhalb und entlang der gleitenden Stange (11) verläuft, wobei sie einen aufnehmenden Raum bildet und mit einer Abdeckkappe (53), die sich am hinteren Ende der gleitenden Stange (11) befindet, um das hintere Ende der gleitenden Stange (11) zu verschließen.

7. Verlängerbares Fahrrad gemäß Anspruch 1, ferner mit einem U-förmigen Fahrradständer (47), der am Hinterrad (25) befestigt ist, wobei dadurch das Fahrrad im Uhrzeigersinn um ca. 90 Grad gedreht werden kann, so dass es auf einer tragenden Oberfläche stehen kann, indem aus den beiden gebogenen Teilen des Fahrradständers (47) und dem hinteren Ende der gleitenden Stange (11) ein Dreieck gebildet wird.

8. Verlängerbares Fahrrad gemäß Anspruch 1, ferner mit einem Anschlag (54), der sich am hinteren Ende der gleitenden Stange (11) befindet, um zu verhindern, dass das hintere Ende der gleitenden Stange (11) in das Kreuzrohr (22) hineinzurutscht oder sich von dem Kreuzrohr (22) löst, wenn die hinteren Enden der gleitenden Stange und des Kreuzrohres (22) fluchten.

9. Verlängerbares Fahrrad gemäß Anspruch 1, ferner mit einem Sattel, der ein Rohr (60) enthält, das sich unter dem Kreuzrohr (22) und zwischen dem versetzt angebrachten Sitzrohr (24) und dem Stützrohr (26) befindet, um das abgenommene Schiebesitzrohr (23) aufzunehmen.

## Revendications

1. Bicyclette à longueur variable, comprenant :
- une structure avant (10) qui comprend un tube de direction (12), une barre coulissante (11) s'étendant vers l'arrière depuis le tube de direction (12), une tige (16) s'étendant vers le bas depuis un guidon (13) et destinée à être accouplée à la partie supérieure du tube de direction (12), une fourche avant (14) s'étendant vers le bas depuis la tige (16) et une roue avant (15) supportée de manière rotative aux extrémités inférieures de la fourche avant (14) ; et
- une structure arrière (20) qui comprend un support de chaîne (29), un support de siège (28), une roue arrière (25), un support inférieur (35) avec une paire de pédales (27) et un mécanisme de transmission (21) accouplé aux pédales, un tube de support (26) et un tube de selle (24) décalé parallèle au tube de support (26) s'étendant tous les deux vers le haut depuis le support inférieur (35), un tube transversal (22) ayant des ouvertures à l'une et l'autre de ses extrémités avant et arrière, situé sur le sommet du tube de support (26) et étant adapté pour recevoir de façon télescopique la barre coulissante (11) de la structure avant (10), un tube de selle coulissant (23), s'étendant depuis le tube de selle décalé (24) et reçu à coulissement dans celui-ci, lequel est latéralement adjacent au tube transversal (22), une selle (55) sur l'extrémité supérieure du tube de selle coulissant (23), une tige de selle (40) formée en tant qu'extension latérale au niveau de l'extrémité supérieure du tube de selle coulissant (23) pour supporter la selle (55) au-dessus du tube transversal (22), et deux éléments de serrage à actionnement rapide (30, 31) pour immobiliser la barre coulissante (11) aux deux extrémités respectives du tube transversal (22).

2. Bicyclette à longueur variable selon la revendication 1, comprenant de plus des moyens d'empêchement pour empêcher une torsion entre le structure avant (10) et la structure arrière (20).

3. Bicyclette à longueur variable selon la revendication 2, dans laquelle lesdits moyens d'empêchement comprennent une rainure longitudinale (36) formée sur la surface extérieure de la barre coulissante (11) et une arête longitudinale (37) formée sur une surface interne du tube transversal (22) de sorte que la barre coulissante (11) peut être maintenue étroitement dans le tube transversal (22) étant donné que la rainure (36) et l'arête (37) sont interpénétrées étroitement.

4. Bicyclette à longueur variable selon la revendication 1, comprenant de plus deux fentes (38, 39) en forme de T formées aux deux extrémités respectives du tube transversal (22) pour fournir une flexibilité de contraction de ce tube au niveau de ces deux extrémités, lorsque la barre coulissante (11) est immobilisée dans le tube transversal.

5. Bicyclette à longueur variable selon la revendication 1, comprenant de plus un troisième élément de serrage à actionnement rapide (51) pour immobiliser le tube de selle coulissant (23) par rapport au tube de selle décalé (24) lorsqu'une portion déterminée du tube de selle coulissant (23) est coulissée à l'intérieur du tube de selle décalé (24), une dépression longitudinale (50) étant formée sur la surface extérieure du tube de selle coulissant (23) et une protubérance (34) étant formée sur une surface interne du tube de selle décalé (24), la protubérance (34) étant engagée étroitement dans la dépression longitudinale (50).

6. Bicyclette à longueur variable selon la revendication 1, comprenant de plus une rainure formée à l'intérieur et le long de la barre coulissante (11), servant d'espace de réception, et un capuchon (53) mis en place au niveau de l'extrémité arrière de la barre coulissante (11) afin de fermer l'extrémité arrière de la barre coulissante (11).

7. Bicyclette à longueur variable selon la revendication 1, comprenant de plus une béquille en forme de U (47) fixée à la roue arrière (25), dans laquelle la bicyclette est telle qu'elle peut être pivotée dans le sens des aiguilles d'une montre sur environ 90 degrés pour être dressée sur une surface de support et qu'elle forme un triangle défini par deux portions recourbées de la béquille (47) et par l'extrémité arrière de la barre coulissante (11).

8. Bicyclette à longueur variable selon la revendication 1, comprenant de plus une butée (54) formée au niveau de l'extrémité arrière de la barre coulissante (11) pour empêcher à l'extrémité arrière de la barre coulissante (11) de coulisser à l'intérieur du tube transversal (22) ou de se désengager du tube transversal (22) lorsque les extrémités arrières de la barre coulissante (11) et du tube transversal (22) sont alignées.

9. Bicyclette à longueur variable selon la revendication 1, comprenant de plus un tube (60) de réception de selle aménagé en dessous du tube transversal (22) et entre le tube de selle décalé (24) et le tube de support (26), destiné à recevoir le tube de selle coulissant (23) après retrait de ce dernier.
